(19) Europäisches Patentamt
European Patent Office
Office européen des brevets

(11)  **EP 1 746 394 B1**

(12)  **EUROPEAN PATENT SPECIFICATION**

(45) Date of publication and mention
of the grant of the patent:
**22.09.2010  Bulletin 2010/38**

(51) Int Cl.:
**G01F 9/00** *(2006.01)*      **F02M 65/00** *(2006.01)*

(21) Application number: **06117335.7**

(22) Date of filing: **17.07.2006**

(54)  **Device for measuring the quantity of fluid ejected by an injector**

Messgerät zur Messung der von einem Injektor eingepritzten Fluidmenge

Appareil pour mesurer la quantité d'un fluide injecté par un injecteur

(84) Designated Contracting States:
**AT BE BG CH CY CZ DE DK EE ES FI FR GB GR
HU IE IS IT LI LT LU LV MC NL PL PT RO SE SI
SK TR**

(30) Priority:  **20.07.2005  IT AN20050038
23.02.2006  IT AN20060012**

(43) Date of publication of application:
**24.01.2007  Bulletin 2007/04**

(73) Proprietor: **AEA S.r.l.
60030 Angeli di Rosora (AN) (IT)**

(72) Inventors:
• **Surace, Filippo
20148 Milano (IT)**
• **Bassi, Aldo
20155 Milano (IT)**
• **Ungaro, Carmine
80070 Ischia (Napoli) (IT)**

(74) Representative: **Manconi, Stefano et al
Studio Torta
Via Viotti, 9
10121 Torino (IT)**

(56) References cited:
**WO-A-02/070996          WO-A-2004/040129
FR-A- 2 795 139          JP-A- 1 063 840
JP-A- 61 004 860          US-A- 5 801 308
US-A1- 2005 034 514**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention refers to a method for measuring the quantity of fluid ejected by an injector, as well as to a device capable of implementing the method, both being particularly useful for measuring the quantity of fuel ejected by an injector of an internal combustion engine.

One of the most important problems faced in the manufacture of injection engines is the precise measurement of the quantity of fluid ejected by the injectors. In general, such check, according to a preferred method, is carried out in the same plant where injectors are manufactured, measuring the stroke of a small sealed piston following volume increase of the fluid due to injection.

The majority of currently known devices operates discontinuously, i.e. the injector ejects the liquid into a suitable chamber, where a sealed piston is found. The injected liquid increases its volume in the chamber, displacing the piston, whose stroke is measured and is a direct function of the ejected quantity of fluid. In order to restore the initial conditions, at the end of the injection and of the measurement, an electrovalve is actuated, removing the liquid and recreating the initial conditions in the chamber. Aside from the possible failures and malfunctioning of a device as sensitive as the electrovalve, this may in any case introduce pressure waves which may cause system perturbations, negatively affecting the measurement result.

In addition to the problems mentioned earlier, there is the need of a perfect piston seal, since even small possible leaks would affect measurement precision.

Finally, the piston must be brought back in position, to be able to start again with a new measurement.

From what has been set forth above, it is evident that the systems described require remarkable and expensive maintenance steps, which affect considerably injector manufacturing costs.

An example of a known device operating discontinuously is disclosed in US-A-5801308 which relates to an apparatus for measuring an injected quantity of liquid. The apparatus comprises a closed pressure vessel for temporarily storing the fuel injected by an injector, a pressure sensor for detecting the pressure within the pressure vessel, a volume-variable device mounted to the pressure vessel, a first electromagnetic valve mounted to the pressure vessel, a backing pressure valve mounted to the first electromagnetic valve, and a second electromagnetic valve mounted to the pressure vessel. The liquid fuel is always injected in the pressure vessel in its closed state and is always removed from the pressure vessel by opening the first electromagnetic valve and via the backing pressure valve.

The drawbacks set forth above are brilliantly solved by the

present invention, which refers to a device for the measurement of the quantity of fluid ejected by an injector nozzle as claimed in the attached claims.

The present invention is now described in greater detail, with reference to the accompanying drawings, wherein:

fig. 1 is a diagram showing an embodiment of a device according to the present invention;
fig. 2 is a diagram showing a second embodiment of a device according to the present invention;
fig. 3 is a diagram showing a third embodiment of a device according to the present invention;
fig. 4 is a diagram showing pressure trend at fluid ejections in a device according to the present invention;
fig. 5 is a diagram showing a device not according to the invention because the collection tank is not represented; and
fig. 6 is a diagram showing a device not according to the invention because the collection tank is not represented.

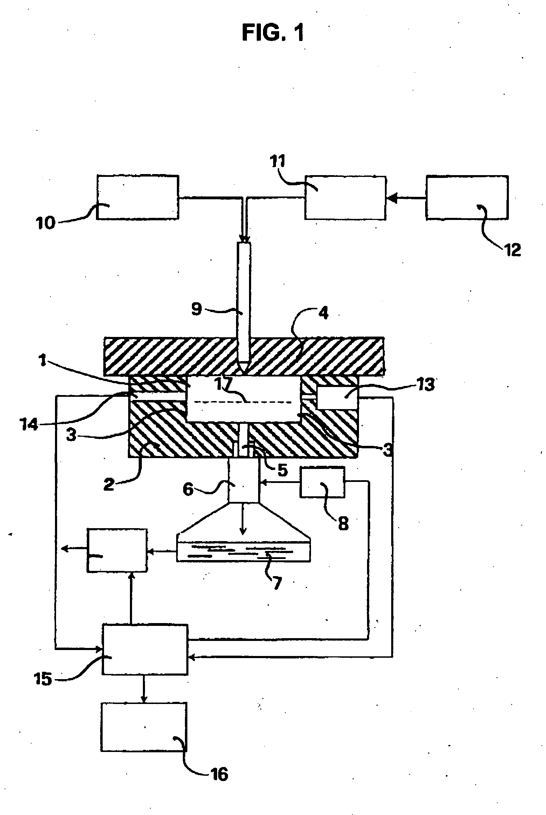

As said, fig. 1 diagrammatically shows a first embodiment of the present invention. The device now comprises a static chamber 1, limited by a bottom 2 and by side walls 3. At the top a cover 4 is fastened, which is integral with walls 3. Bottom 2 of chamber 1 has a bore 5 leading into an adjustable-opening bore 6 which opens into a collection tank 7. The adjustment of the opening of bore 6 is performed through a suitable adjusting system unit 8.

Cover 4 too has a bore into which an injector 9 is introduced, the ejections whereof are to be measured. A device 10 feeds the fluid to the injector, while the end stage 11 of an injection device and a control unit 12 preside over ejection control.

One of walls 3 of chamber 1 carries a pressure sensor 13, while the other carries a temperature sensor 14. The pressure and temperature data are sent by respective sensors 13, 14 to a data collection unit 15, normally connected to a computer 16. Naturally, multiple temperature and/or pressure sensors may be provided and they may be arranged on a single wall 3. Possibly, chamber 1 may be advantageously equipped with a grating 17, allowing to dampen the pressure waves resulting from fluid injection.

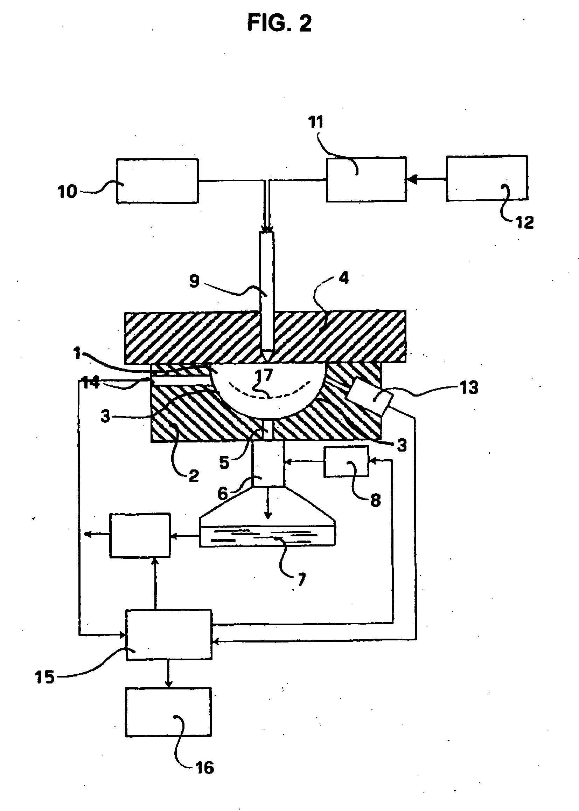

The embodiment according to fig. 2 is the same as that of fig. 1, with the exception of the shape of chamber 1, which, rather than having a quadrilateral section, has a semi-circular section. A hemispherical shape, which is comprised in the embodiment shown, may be particularly advantageous in certain specific situations.

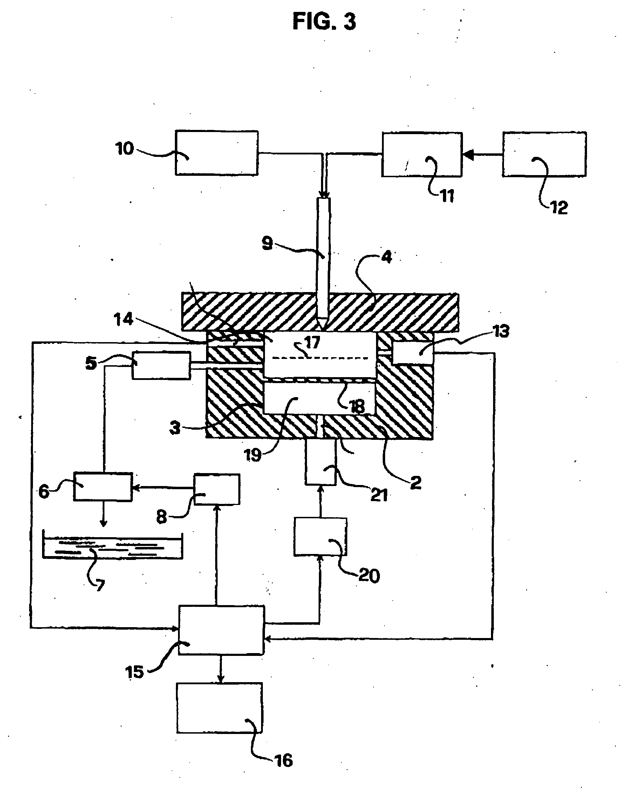

The embodiment of fig. 3 also has remarkable similarities with the previous ones. However, bore 5, rather than on chamber bottom 2, is found on one of walls 3. Chamber 1 has an elastic lower wall 18, which separates it from a gas-containing chamber 19, the pressure whereof is adjusted by devices 20 and 21, connected to data collection device 15.

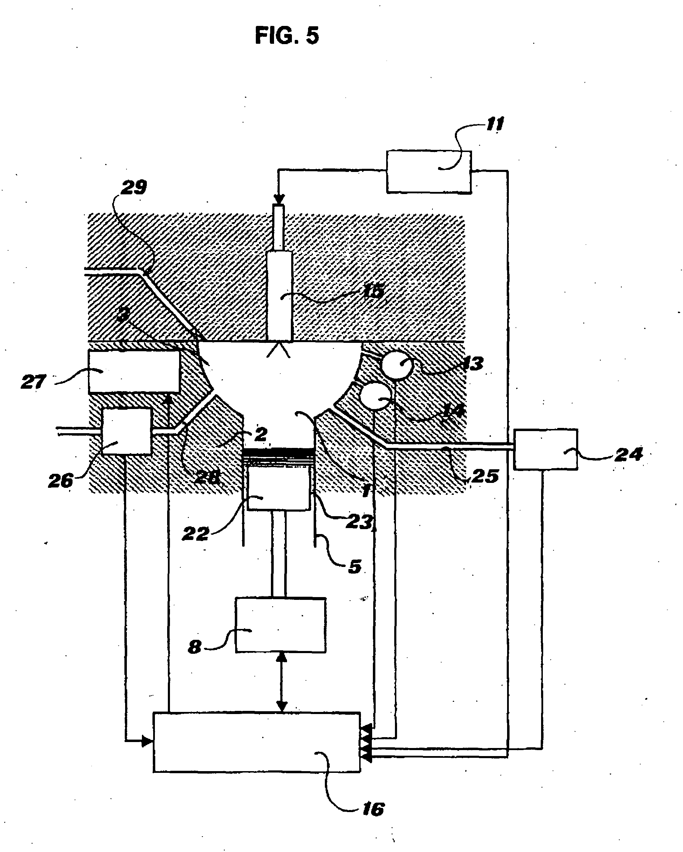

Fig. 5 diagrammatically shows a device not according to the invention because the collection tank is not represented. The device comprises a measuring chamber 1, limited by a bottom 2 and by a side wall 3. The bottom 2 of chamber 1 has a bore 5 which carries a piston 22. Such piston is provided with an absolute sealing system (23), manufactured either conventionally (elastomer) or preferably by elastic deformation of the skirt which cancels the play between piston and bore, removing the measuring error due to elastomer deformation. A stopping device, not shown in the drawing, is associated with piston 22. Piston 22 is driven by a device 8 adjusting the position and its measurement, in turn connected to a computer 16. A temperature sensor 14, a pressure sensor 13, a mass flow meter 24 downstream of outlet system 25, a system 11 for the actuation of injector 9, housed at the top of chamber 1, a safety valve 26 and a thermostat 27 are also connected with computer 16.

Mass flow meter 24 is connected with chamber 1 through an outlet pipe and outlet system 25.

Safety valve 26 intercepts a pipe 28 coming from chamber 1, avoiding dangerous overpressures in case of malfunctioning. Finally, a bleeder vent 29 is provided at the top of chamber 1, which, in turn, is equipped with an interception valve, not shown in fig. 5.

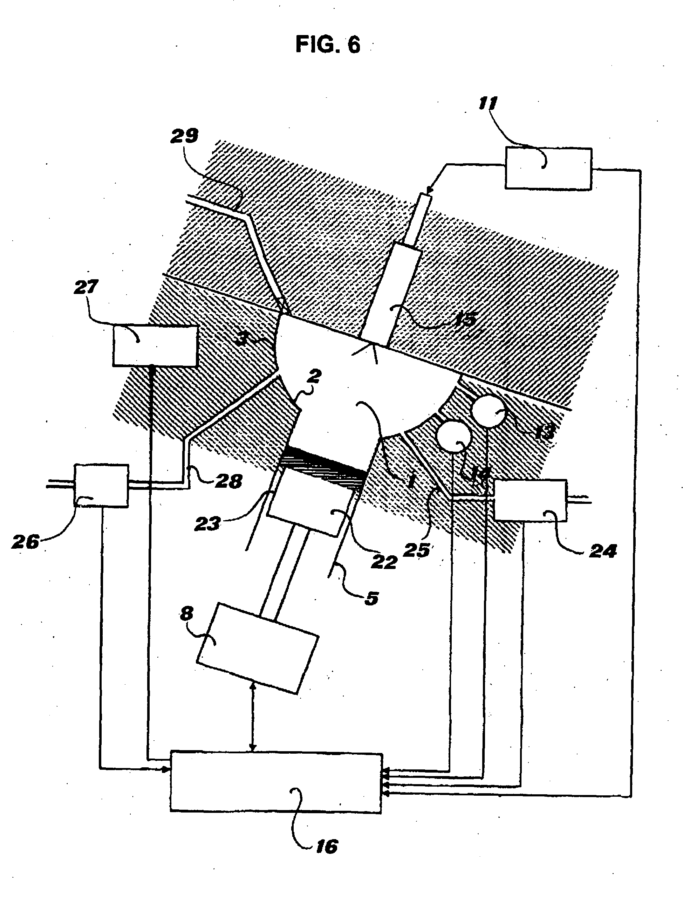

Fig. 6 diagrammatically shows a device not according to the invention because the collection tank is not represented. The device shown in fig. 6 is fully similar to the one shown in fig. 5. The only actual difference is the inclination of chamber 1, the bottom 2 thereof, bore 5 and piston 22 with respect to the perpendicular to the ground, in order to aid chamber bleeding.

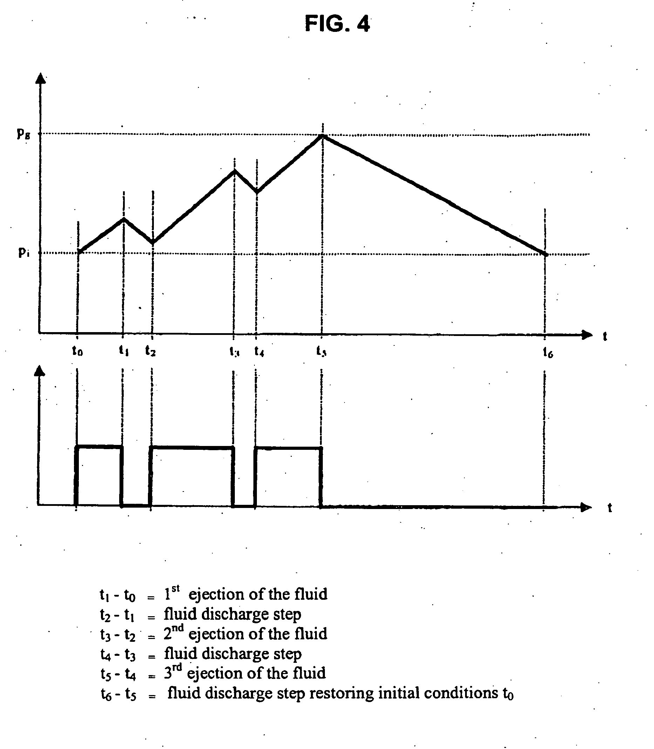

When it is intended to proceed to the measurement of fluid ejection from injector 9, said injector is placed in position in cover 4. The injection system, consisting of feeding device 10, end stage 11 and central processing unit 12, causes a quantity of fluid to be ejected by injector 9. As can be appreciated in fig. 4, to the ejection of a quantity of fluid (step to - $t_1$), corresponds a pressure increase inside chamber 1. Such pressure increase is read by sensor 13 and sent to data collection device 15, together with the temperature value, measured by sensor 14. The data gathered by device 15 are sent to computer 16 which, from the pressure and temperature values, infers the fluid quantity, which is a function of these two parameters.

In the meantime (step $t_1$ - $t_2$ of fig. 2) from bore 5 the fluid continuously flows into collection tank 7. Pressure therefore tends to decrease. In step $t_2$ - $t_3$ of fig. 4, there is again ejection, with renewed pressure increase. In order to obtain the value of the ejected quantity, computer 16 must obviously take into account the quantity discharged into collection tank 7. This quantity may be easily derived, since adjustment of the opening of bore 6 allows to achieve an outgoing flow rate which is a function of the pressure difference between the chambers upstream and downstream of the injector, hence the quantity still found in chamber 1 is a function of the opening and of the time, as is the quantity which has abandoned chamber 1.

For measuring with the device according to the present invention, fluid features such as elastic modulus and compressibility are paramount. They must therefore be fed as data to computer 16.

In order to improve the above-said features, the embodiment shown in fig. 3 provides elastic wall 18. In order to be able to operate elastically, wall 18 must be in contact with gas-containing chamber 19, the pressure of which is made to vary according to requirements, so as to reduce to a minimum the stresses on elastic wall 18.

Should one want to proceed to measuring fluid ejection from injector 9 represented according to fig. 5 or 6, it is necessary to perform some preliminary operations. Firstly, one proceeds to the adjustment of the volume of chamber 1. This is accomplished by displacing according to requirements, through the adjustment system 8 of the position of piston 22, piston 22 into the desired position. The stop (not shown) allows to keep the position for as long as the time of measurement. Subsequently, it is to be proceeded to the bleeding of any gases through bleeder vent 29.

Following these preliminary steps, injector 9 is made to perform a cycle of injections sufficient to stabilise the system. As known, to the ejection of a quantity of fluid, corresponds a pressure change inside chamber 1. Such pressure trend is read by sensor 13 and sent to computer 16, which also receives the temperature value, measured by sensor 14. Computer 16, from the pressure and temperature values, traces back the instant fluid flow rate, which is a function of these two parameters.

In the meantime, from outlet system 25 the fluid is discharged continuously, measuring the average discharge flow rate on a certain number of cycles with mass flow meter 24. In order to derive the value of the actual flow rate ejected by the injector, computer 16 must obviously take into account the average flow rate discharged which is measured by mass flow meter 24.

In computer 16, the calculation of the flow rate of injector 15 is performed according to the following steps:

a) the pressure trend inside chamber 1 is detected during a certain number of steady injection cycles;
b) the average flow rate of the fluid is measured by mass flow meter 24;
c) from the average flow rate of liquid $F_m$ and from the difference between the instant pressures and the outlet pressure, parameters $C_0$, $C_1$ and $C_2$ are obtained;
d) from the value of the above-said parameters, the value of the instant flow rate F of the injector is obtained.
The calculation of instant flow rate F may be performed according to the formula:

$$F = C_0 \frac{dP}{dT} + \left[ \sqrt{C_1^2 + C_2^2 (P - P^{\bullet})} - C_1 \right]$$

where: $C_0$ is the rigidity parameter of the liquid contained in the measurement chamber
$C_1$ is the parameter of the linear component of the pressure drop at the outlet
$C_2$ is the parameter of the quadratic component of the pressure drop at the outlet
$P$ is the pressure in the measurement chamber
$P^*$ is the pressure at the outlet.

The reckoning of parameters $C_1$ and $C_2$ is accomplished by integrating the above-said formula in a sufficiently long number of stabilised cycles, obtaining the function of $C_2 (\xi)$ where $\xi = C_1/C_2$:

$$C_2 = C_2(\xi) = \frac{F_m}{\frac{1}{nT} \int_0^{nT} \sqrt{\xi^2 + (P - P^{\bullet})}\, dt - \xi}$$

where: $T$ is the period of a cycle
$n$ is the number of cycles
$Fm$ is the average flow rate, measured by means of an external sensor (for example mass flow meter 24).

The reckoning of $C_0$ is accomplished by calculating the pressure derivative with respect to the time in the cycle step in which the injector flow rate is nought.
By choosing the values of $\xi$ and of $C_0$ so that they minimise the average quadratic difference between the calculated derivative $dP/dt$ and the one detected experimentally, parameters $C_0$, $C_1$ and $C_2$ are obtained.
In the case of turbulent motion, the laminar component $C_1$ is nought and we have:

$$C_2 = \frac{F_m}{\frac{1}{nT} \int_0^{nT} \sqrt{(P - P^{\bullet})}\, dt}$$

and

$$C_0 = \frac{-C_2 \sqrt{P - P^{\bullet}}}{\frac{dP}{dt}}$$

e) in general, instant flow rate F may be calculated on the basis of the following differential equation:

$$F = C_0 \frac{dP}{dT} + \left[ \sqrt{C_1^2 + C_2^2 (P - P^{\bullet})} - C_1 \right]$$

The method and the devices according to the present invention may be used in all the fields in which the calibration of an injector is important, in particular for the injectors of motorvehicle engines, for discontinuous flow rate nozzles and the like.

It is clear that, at least in principle, the method and the device according to the present invention may be used for any type of fluid, in both liquid or gaseous state.

**Claims**

1. Device for measuring the quantity of fluid ejected by an injector (9), the device comprising a chamber (1) limited by a bottom (2), by rigid side walls (3), and by a cover (4) which is integral with the side walls (3), the injector (9) ejecting the fluid into the chamber (I) and the measurement being performed in the chamber (3) and being carried out on the basis of the pressure increase occurring in the chamber (1) following said fluid ejection; and a collection tank (7) for collecting the fluid flowing from the chamber (1); and **characterised in that** it further comprises a first bore (5), which is provided through said bottom (2) or through one of said side walls (3), and which allows the fluid to continuously flow into said collection tank (7).

2. Device as claimed in claim 1, **characterised in that** it further comprises a second adjustable-opening bore (6) which opens into said collection tank (7); the first bore (5) leading to the second bore (6).

3. Device as claimed in claim 2, **characterised in that** it further comprises an adjusting system (8) for adjusting the opening of said second bore (6).

4. Device as claimed in any one of the preceding claims, **characterised in that** it further comprises one or more pressure sensors (13) and one or more temperature sensors (14) carried by one or more of the side walls (3) of the chamber (1).

5. Device as claimed in claim 4, **characterised in that** it further comprises a data collection unit (15), normally connected to a computer (16); the pressure and temperature data detected by said sensors (13, 14) being sent to the data collection unit (15).

6. Device as claimed in any one of the preceding claims, **characterised in that** the chamber (1) is provided with a grating (17) to dampen the pressure waves due to fluid ejection.

7. Device as claimed in any one of the preceding claims, **characterised in that** said chamber (1) has a quadrilateral cross-section.

8. Device as claimed in any one of claims 1 to 6, **characterised in that** said chamber (1) has a semicircular cross-section.

9. Device as claimed in claim 8, **characterised in that** said chamber (1) has a hemispherical shape.

10. Device as claimed in any one of the preceding claims, **characterised in that** the chamber (1) has an elastic wall (18).

11. Device as claimed in claim 10, **characterised in that** said elastic wall (18) divides said chamber (1) from a gas-containing chamber (19), the pressure whereof is adjusted by devices (20, 21) connected to the data collection unit (15).

**Patentansprüche**

1. Vorrichtung zum Messen der durch einen Injektor (9) ausgestoßenen Flüssigkeitsmenge, die Vorrichtung umfassend eine Kammer (1), welche durch einen Boden (2), durch feste Seitenwände (3) und durch einen Deckel (4), welcher integral zu den Seitenwänden (3) ist, begrenzt ist, wobei der Injektor (9) die Flüssigkeit in die Kammer (1) ausstößt und die Messung in der Kammer (3) durchgeführt wird und auf der Basis des Druckanstiegs, der in der Kammer (1) aufgrund des Flüssigkeitsausstoßes entsteht, ausgeführt wird; und einen Sammeltank (7) zum Sammeln der Flüssigkeit, die aus der Kammer (1) fließt; **dadurch gekennzeichnet, dass** diese des Weiteren eine erste Bohrung (5) umfasst, welche durch den Boden (2) oder durch eine der Seitenwände (3) vorgesehen ist und welche ermöglicht, dass die Flüssigkeit kontinuierlich in den Sammeltank (7) fließt.

**2.** Vorrichtung nach Anspruch 1, **dadurch gekennzeichnet, dass** diese des Weiteren eine zweite Bohrung mit einstellbarer Öffnung (6) umfasst, welche in den Sammeltank (7) öffnet, wobei die erste Bohrung (5) zur zweiten Bohrung (6) führt.

**3.** Vorrichtung nach Anspruch 2, **dadurch gekennzeichnet, dass** diese des Weiteren ein Einstellsystem (8) zum Einstellen der Öffnung der zweiten Bohrung (6) umfasst.

**4.** Vorrichtung nach einem der vorhergehenden Ansprüche, **dadurch gekennzeichnet, dass** diese des Weiteren einen oder mehrere Drucksensoren (13) und einen oder mehrere Temperatursensoren (14) umfasst, die durch eine oder mehrere der Seitenwände (3) der Kammer (1) getragen werden.

**5.** Vorrichtung nach Anspruch 4, **dadurch gekennzeichnet, dass** diese des Weiteren eine Datensammeleinheit (15) umfasst, die gewöhnlich an einen Computer (16) angeschlossen ist, wobei die durch Sensoren (13, 14) ermittelten Druck- und Temperaturdaten an die Datensammeleinheit (15) gesendet werden.

**6.** Vorrichtung nach einem der vorhergehenden Ansprüche, **dadurch gekennzeichnet, dass** die Kammer (1) mit einem Gitter (17) versehen ist, um die Druckwellen aufgrund der Flüssigkeitsausstoßung zu dämpfen.

**7.** Vorrichtung nach einem der vorhergehenden Ansprüche, **dadurch gekennzeichnet, dass** die Kammer (1) einen vierseitigen Querschnitt aufweist.

**8.** Vorrichtung nach einem der Ansprüche 1 bis 6, **dadurch gekennzeichnet, dass** die Kammer (1) einen halbkreisförmigen Querschnitt aufweist.

**9.** Vorrichtung nach Anspruch 8, **dadurch gekennzeichnet, dass** die Kammer (1) eine halbsphärische Form aufweist.

**10.** Vorrichtung nach einem der vorhergehenden Ansprüche, **dadurch gekennzeichnet, dass** die Kammer eine elastische Wand (18) aufweist.

**11.** Vorrichtung nach Anspruch 10, **dadurch gekennzeichnet, dass** die elastische Wand (18) die Kammer (1) von einer gasenthaltenden Kammer (19) trennt, wobei der Druck davon mittels mit der Datensammeleinheit (15) verbundenen Vorrichtungen (20, 21) reguliert wird.

**Revendications**

**1.** Dispositif pour mesurer la quantité de fluide éjecté par un injecteur (9), le dispositif comprenant une chambre (1) limitée par un fond (2), par des parois latérales rigides (3), et par un capot (4) qui est solidaire avec les parois latérales (3), l'injecteur (9) éjectant le fluide dans la chambre (1) et la mesure étant effectuée dans la chambre (3) et étant menée sur la base de l'augmentation de la pression ayant lieu dans la chambre (1) suite à l'injection dudit fluide ; et un réservoir de collecte (7) pour la collecte du fluide s'écoulant de la chambre (1) ; et **caractérisé en ce qu'**il comprend en plus un premier alésage (5), qui est pourvu à travers ledit fond (2) ou à travers l'une desdites parois latérales (3), et qui permet un écoulement continu du fluide dans ledit réservoir de collecte (7).

**2.** Dispositif tel que revendiqué dans la revendication 1, **caractérisé en ce qu'**il comprend en plus un second alésage (6) à ouverture réglable qui débouche dans ledit réservoir de collecte (7) ; le premier alésage (5) menant au second alésage (6).

**3.** Dispositif tel que revendiqué dans la revendication 2, **caractérisé en ce qu'**il comprend en plus un système de réglage (8) pour régler l'ouverture dudit second alésage (6).

**4.** Dispositif tel que revendiqué dans l'une des revendications précédentes, **caractérisé en ce qu'**il comprend en plus un ou plusieurs capteurs de pression (13) et un ou plusieurs capteurs de température (14) portés par une ou plusieurs des parois latérales (3) de la chambre (1).

**5.** Dispositif tel que revendiqué dans la revendication 4, **caractérisé en ce qu'**il comprend en plus une unité de collecte de données (15), normalement connectée à un ordinateur (16) ; les données de pression et de température détectées par lesdits capteurs (13, 14) étant envoyées à l'unité de collecte de données (15).

6. Dispositif tel que revendiqué dans l'une quelconque des revendications précédentes, **caractérisé en ce que** la chambre (1) est équipée d'une grille (17) pour amortir les ondes de pression dues à l'éjection de fluide.

7. Dispositif tel que revendiqué dans l'une des revendications précédentes, **caractérisé en ce que** ladite chambre (1) a une section transversale quadrilatère.

8. Dispositif tel que revendiqué dans l'une quelconque des revendications 1 à 6, **caractérisé en ce que** ladite chambre (1) a une section transversale semi-circulaire.

9. Dispositif tel que revendiqué dans la revendication 8, **caractérisé en ce que** ladite chambre (1) a une forme hémisphérique.

10. Dispositif tel que revendiqué dans l'une des revendications précédentes, **caractérisé en ce que** la chambre (1) a une paroi élastique (18).

11. Dispositif tel que revendiqué dans la revendication 10, **caractérisé en ce que** ladite paroi élastique (18) sépare ladite chambre (1) d'une chambre (19) contenant du gaz, dont la pression est réglée par des dispositifs (20, 21) connectés à l'unité de collecte de données (15).

# FIG. 1

## FIG. 2

# FIG. 3

## FIG. 4

$t_1 - t_0$ = 1st ejection of the fluid
$t_2 - t_1$ = fluid discharge step
$t_3 - t_2$ = 2nd ejection of the fluid
$t_4 - t_3$ = fluid discharge step
$t_5 - t_4$ = 3rd ejection of the fluid
$t_6 - t_5$ = fluid discharge step restoring initial conditions $t_0$

EP 1 746 394 B1

FIG. 5

12

# FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5801308 A